# EUROPÄISCHE PATENTANMELDUNG

(11) **EP 2 905 503 A2**
(43) Veröffentlichungstag der Anmeldung: **12.08.2015**
(21) Anmeldenummer: 15000073.5
(22) Anmeldetag: 14.01.2015
(51) Int. Cl.: F16F 1/38

(54) **Elastomer-Lagerbuchse, insbesondere zur Lagerung eines Stoßdämpfers einer Fahrzeug-Achsanbindung**

(30) Priorität: 11.02.2014 DE 102014001943
(71) Anmelder: Jörn GmbH, 71336 Waiblingen (DE)
(72) Erfinder: Reinke, Kai, 71686 Remseck (DE); Mursinsky, Jörg, 71522 Backnang (DE)
(74) Vertreter: Liebl, Thomas

(57) **Zusammenfassung**

Die Erfindung betrifft eine Elastomer-Lagerbuchse, insbesondere zur Lagerung eines Stoßdämpfers einer Fahrzeug-Achsanbindung, mit einem Innenteil (2) zum Anschluss eines ersten zu lagernden Bauteils und mit einem Außenrohr (3), welches das Innenteil (2) umgibt, und mit einer Elastomerschicht (4) zwischen dem Außenrohr (3) und dem Innenteil (2), wobei im Einbauzustand das Außenrohr (3) mit einer Durchmesserreduzierung in einen im Durchmesser kleineren Aufnahmeraum (13) eines zweiten zu lagernden Bauteils unter Aufbringung einer Vorspannung in der Elastomerschicht einpressbar ist. Erfindungsgemäß weist das Außenrohr (3) und die dortige Elastomerschicht (4) wenigstens eine Ausnehmung als Fensteröffnung (5, 5') auf, und das Innenteil (2) weist einen radial als Erhöhung abstehenden, in die Fensteröffnung (5, 5') eingreifenden InnenteilAnschlag (6, 6') auf, dergestalt dass im betriebsmäßig unbelasteten Einbauzustand bei vorgespannter Elastomerschicht (4) ein Radial-Spalt (14, 14') als anschlagbegrenzter, freier Federweg für eine Radialauslenkung des Innenteils (2) zwischen der radialen Außenfläche des Innenteil-Anschlags (6, 6') als Anschlagfläche (10, 10') und der Wandfläche eines umgebenden Aufnahmeraums (13) als Gegenanschlagfläche zur Verfügung steht.

## Beschreibung

Die Erfindung betrifft eine Elastomer-Lagerbuchse, insbesondere zur Lagerung eines Stoßdämpfers einer Fahrzeug-Achsanbindung nach dem Oberbegriff des Anspruchs 1.

Eine allgemein bekannte, gattungsgemäße Elastomer-Lagerbuchse besteht aus einem Innenrohr zum Anschluss eines ersten zu lagernden Bauteils und einem Außenrohr, in dem das Innenteil aufgenommen ist. Zwischen dem Außenrohr und dem Innenrohr liegt eine Elastomerschicht als Gummischicht, wobei das Innenrohr und das Außenrohr durch die anvulkanisierte Gummischicht fest miteinander verbunden sind. Im Herstellzustand weist das Außenrohr einen durchgehenden Längsschlitz auf, der sich V-förmig in der Elastomerschicht bis zum Innenteil fortsetzt. Im Einbauzustand ist diese Lagerbuchse mit einer Durchmesserreduzierung des Außenrohrs in ein im Innendurchmesser kleineres Aufnahmeauge als Aufnahmeraum eingepresst, wobei der Längsschlitz des Außenrohrs geschlossen wird und in der Gummischicht eine Vorspannung aufgebracht wird. Am Aufnahmeauge ist ein zweites zu lagerndes Bauteil angeschlossen oder das Aufnahmeauge ist als Aufnahmeraum Bestandteil des zweiten zu lagendern Bauteils.

Ein solches bekanntes Elastomer-Lager kann Relativbewegungen zwischen den beiden zu lagernden Bauteilen als Axialauslenkungen und/oder Radialauslenkungen und/oder Verdrehauslenkungen molekular in der Gummischicht aufnehmen. Die entsprechenden Federkennlinien sind im Wesentlichen durch die Abmessungen und Materialeigenschaften der Gummischicht bestimmt.

Bei Straßenfahrzeugen, insbesondere bei Nutzfahrzeugen treten regelmäßig hohe Kräfte an elastomergelagerten Lagerstellen des Fahrwerks auf. Um eine bekannte Elastomer-Lagerbuchse dabei vor einer Überlastung zu schützen ist es erforderlich diese relativ hart, mit steiler Federkennung auszulegen. Im Gegensatz dazu steht die Forderung nach hohem Fahrkomfort und verbesserter Fahrzeugakustik, die eine weiche Lageranbindung, insbesondere mit radial weicher Federkonstante erfordert. Beide Forderungen sind mit der bekannten Elastomer-Lagerbuchse nicht zu erfüllen.

Aufgabe der Erfindung ist es, eine gattungsgemäße Elastomer-Lagerbuchse so weiterzubilden, dass eine relativ weiche Lageranbindung und ein Überlastungsschutz in einer Elastomer-Lagerbuchse realisierbar ist.

Diese Aufgabe wird dadurch gelöst, dass das Außenrohr und die dortige Elastomerschicht wenigstens eine Ausnehmung als Fensteröffnung aufweist. Das Innenteil weist zugeordnet einen radial als Erhöhung abstehenden, in die Fensteröffnung eingreifenden Innenteil-Anschlag auf, dergestalt, dass im betriebsmäßig unbelasteten Einbauzustand bei vorgespannter Elastomerschicht ein Radial-Spalt als anschlagbegrenzter freier Federweg für eine Radialauslenkung des Innenteils zwischen der radialen Außenfläche des Innenteil-Anschlags als Anschlagfläche und der Wandfläche eines umgebenden Aufnahmeraums als Gegenanschlagfläche zur Verfügung steht.

Die Elastomerschicht kann hier mit weicher Federkennung ausgelegt werden, wobei bei betriebsmäßig üblichen Belastungen radiale Relativbewegungen im Radialspalt als freiem Federweg mit weicher Lageranbindung erfolgen. Wenn bei hohen Radialbelastungen in Richtung des Innenteil-Anschlags der freie Federweg im Radialspalt überschritten werden würde, kommt der Überlastschutz zum Einsatz, indem sich der Innenteil-Anschlag an der Wandfläche des umgebenden Aufnahmeraums abstützt. Damit sind sowohl eine weiche Lageranbindung und ein Überlastungsschutz in einer Elastomer-Lagerbuchse integriert.

Vorteilhaft sind solche Anschlagstrukturen jeweils radial gegenüberliegend an der Elastomer-Lagerbuchse, vorzugsweise in den Haupt-Radialbelastungsrichtungen angeordnet. Wenn beispielsweise nur in einer Radialrichtung maximale wechselseitige Radialbelastungen auftreten, bei denen ein Überlastungsschutz erforderlich ist, sind entsprechend zwei gegenüberliegende Anschlagstrukturen mit vorzugsweise zwei gleichen Fensteröffnungen mit zugeordneten gleichen Innenteilanschlägen vorzusehen.

In einer besonders bevorzugten Weiterbildung sind die Fensteröffnung und ein zugeordneter Innenteil-Anschlag jeweils so dimensioniert, dass im Einbauzustand zwischen dem Rand der Fensteröffnung und dem Rand des Innenteil-Anschlags zumindest in Teilbereichen, vorzugsweise umlaufend ein Randspalt als freier Federweg für eine anschlagbegrenzte relative Axialauslenkung und/oder Verdrehauslenkung der beiden zu lagernden Bauteile zur Verfügung steht.

Besonders vorteilhaft kann damit zusätzlich zu einer weichen Lageranbindung mit Überlastungsschutz für radiale Auslenkungen entsprechend auch eine weiche Lageranbindung mit einem Überlastungsschutz für axiale Auslenkungen und/oder Verdrehauslenkungen einfach und kostengünstig in der Elastomer-Lagerbuchse integriert werden.

Ein Anschlag und eine Abstützung des Innenteil-Anschlags kann bei großen Axialbelastungen und/oder Verdrehbelastungen insbesondere am Fensterrand der Elastomerschicht-Ausnehmung erfolgen, der gegebenenfalls bei der Aufbringung der Vorspannung zum Innenteil-Anschlag hin aufgewölbt sein kann. Für eine sehr stabile Abstützung dieser Kräfte kann in einer weiteren Ausgestaltung am Rand der Fensteröffnung das Außenrohr mit einem Randsteg zur Ausbildung einer stabilen Anschlaggegenfläche nach radial Innen in den Bereich der Elastomerschicht abgebogen werden.

Für einen großflächigen gleichmäßigen Anschlag und eine geeignete Abstützung der auftretenden Kräfte können in einer radialen Draufsicht sowohl die Fensteröffnung als auch der zugeordnete Innenteil-Anschlag rechteckförmig ausgebildet werden.

Grundsätzlich kann die Elastomer-Lagerbuchse im Querschnitt unterschiedliche Formen aufweisen, insbesondere im Querschnitt oval, rechteckförmig, etc. sein. Zweckmäßig wird die Elastomer-Lagebuchse in an sich bekannter Weise mit einem kreiszylindrischen Außenrohr und mit einer kreiszylindrischen, zugeordneten Innenfläche des Aufnahmeraums sowie mit einer kreiszylindrischen Außenfläche des Innenteils ausgebildet. Zudem wird erfindungsgemäß auch die Anschlagfläche des Innenteilanschlags entsprechend der kreiszylindrischen Gegenanschlagfläche der Außenraumwand für einen flächigen Anschlag als Kreiszylindersegment gebogen ausgeführt.

Für einen gedämpften Anschlag wird vorteilhaft der Innenteil-Anschlag an seiner radialen Anschlagfläche und/oder an seinen Randanschlagflächen mit einem Elastomerüberzug versehen, dessen Ausbildung die Steilheit der Federkennung im Anschlagfall bestimmt.

Der Innenteil-Anschlag wird zweckmäßig materialeinheitlich am Innenteil durch formende und/oder spanabhebende Verfahren ausgebildet. Alternativ kann jedoch der Innenteilanschlag gegebenenfalls materialunterschiedlich als separates Bauteil hergestellt werden und am rohrförmigen Innenteil fest durch übliche Verbindungstechniken verbunden werden.

Für den Anschluss des ersten zu lagernden Bauteils am Innenteil werden üblicherweise zwei Alternativen verwendet: bei der ersten Alternative ist das Innenteil als Rohr mit einer axialen Anschlussbohrung für eine Schraubverbindung mit dem ersten zu lagernden Bauteil ausgebildet. Bei der zweiten Alternative weist das Innenteil eine oder zwei gegenüberliegende abstehende Anschlusspratzen für eine Verbindung zum ersten zu lagernden Bauteil auf. Das Innenteil kann gegebenenfalls auch integraler Bestandteil des ersten zu lagernden Bauteils sein.

Für die Elastomerschicht und gegebenenfalls den Elastomerüberzug können unterschiedliche Materialien mit Elastomereigenschaften verwendet werden. Einfach und kostengünstig können dazu anvulkanisierte Gummischichten verwendet werden, wobei die Dimensionierung so zu erfolgen hat, dass bei der anschlagbegrenzten Einfederung in der im Einbauzustand vorgespannten Gummischicht keine Zugspannungen auftreten können, welche zu einer Überlastung und einer Zerstörung des Lagers führen können.

Die Elastomer-Lagerbuchse kann je nach den Gegebenheiten als kalibrierte Buchse mit geschlossenem Außenrohr oder als Schlitzbuchse mit längsgeschlitztem Außenrohr oder als Buchse mit zwei zusammenspannbaren Außenhalbschalen ausgeführt sein. Wesentlich dabei ist, dass das im Herstellzustand mit größerem Außendurchmesser vorliegende Außenrohr mit einer Durchmesserverringerung zur Aufbringung der Vorspannung in der Elastomerschicht in einen entsprechend durchmesserreduzierten Aufnahmeraum einpressbar ist oder der Aufnahmeraum gegebenenfalls zusammenspannbar ist. Der Einpressvorgang kann mittels einer sich insbesondere im Durchmesser verjüngenden Führungsbuchse und gegebenenfalls durch Einführschrägen am Außenrohr vereinfacht werden.

Anhand einer Zeichnung wird die Erfindung weiter erläutert.

Es zeigen:
- Fig. 1: eine perspektivische Ansicht einer Elastomer-Lagerbuchse einer ersten Ausführungsform im Herstellzustand,
- Fig. 2: einen Längsschnitt durch die Elastomer-Lagerbuchse nach Fig. 1 entlang der Linie A-A,
- Fig. 3: einen Querschnitt durch die Elastomer-Lagerbuchse nach Fig. 1 entlang der Linie B-B aus Fig. 2,
- Fig. 4: eine perspektivische Ansicht einer Elastomer-Lagerbuchse einer zweiten Ausführungsform im Herstellzustand,
- Fig. 5: einen Längsschnitt durch die Elastomer-Lagerbuchse nach Fig. 4 entlang der Linie C-C,
- Fig. 6: einen Querschnitt durch die Elastomer-Lagerbuchse nach Fig. 4 entlang der Linie D-D aus Fig. 5,
- Fig. 7: die Elastomer-Lagerbuchse nach Fig. 4 im Einbauzustand,
- Fig. 8: den Längsschnitt nach Fig. 5 im Einbauzustand, und
- Fig. 9: den Querschnitt nach Fig. 6 im Einbauzustand.

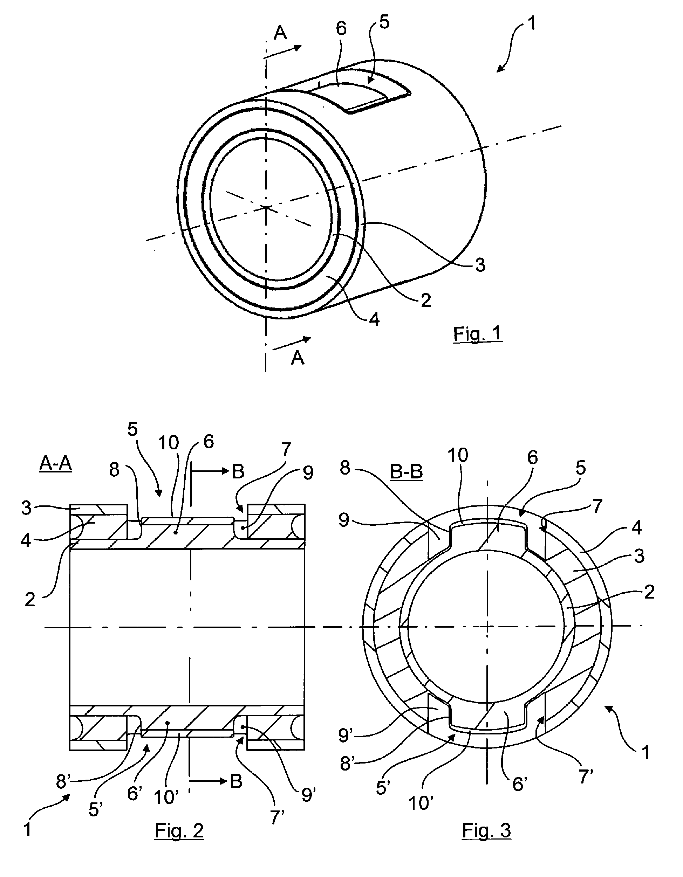

In Fig. 1 ist eine Elastomer-Lagerbuchse 1 einer ersten Ausführungsform im Herstellzustand in einer perspektivischen Ansicht dargestellt, deren Aufbau in Verbindung mit dem zugeordneten Längsschnitt nach Fig. 2 und dem Querschnitt nach Fig. 3 nachfolgend erläutert wird.

Die Elastomer-Lagerbuchse 1 besteht aus einem Innenteil als kreiszylindrischem Innenrohr 2 und einem zugeordneten im Durchmesser größeren Außenrohr 3. Das Innenrohr 2 und das Außenrohr 3 sind durch eine dazwischen einvulkanisierte Gummischicht 4 verbunden.

Das Außenrohr 3 und die dortige Gummischicht 4 weisen jeweils radial gegenüberliegend eine Ausnehmung als rechteckige Fensteröffnung 5, 5' auf. Am Innenrohr 2 ist jeweils im Bereich der Fensteröffnungen 5, 5' eine radiale Erhöhung als rechteckiger Innenteil-Anschlag 6, 6' angeformt, der jeweils in die Fensteröffnung 5, 5' dergestalt einragt, das zwischen dem umlaufenden Fensterrand 7, 7' und dem umlaufenden Innenteilrand 8, 8' jeweils ein umlaufender Randspalt 9, 9' liegt. Ersichtlich ist hier zu Dimensionierungszwecken jeweils der längsverlaufende Teil des Randspalts 9, 9' breiter als der querverlaufende Teil des Randspalts 9, 9' ausgebildet.

Der Innenteilanschlag 6, 6' ist hier jeweils an seiner radial außen liegenden Anschlagfläche mit einem Gummiüberzug 10, 10' ausgerüstet.

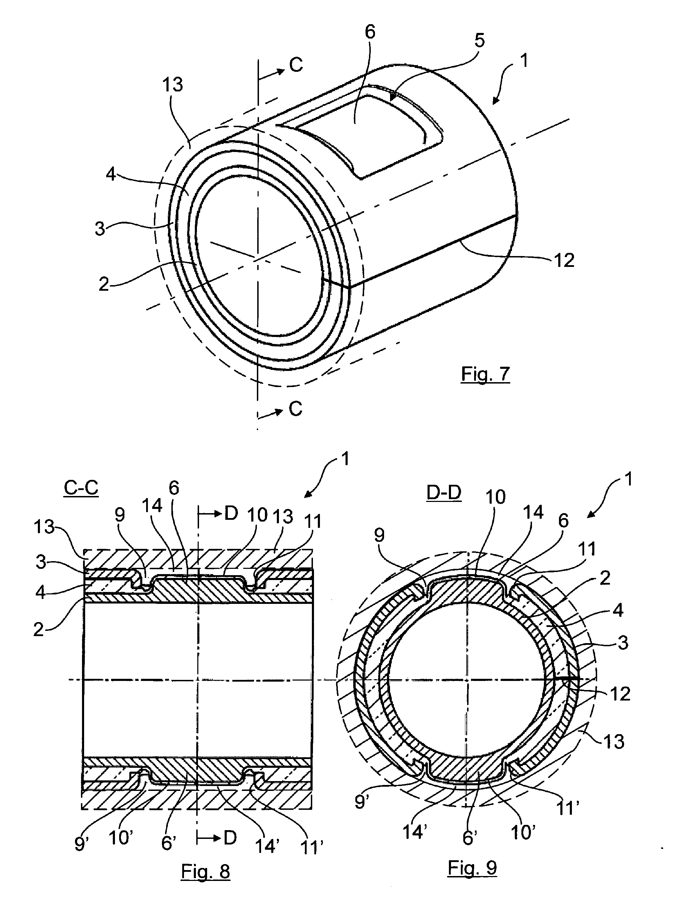

Der Einbauzustand und die Funktion der Elastomer-Lagerbuchse nach den Fig. 1 bis 3 werden in Verbindung mit der weitgehend ähnlichen Elastomer-Lagerbuchse der zweiten Ausführungsform in Verbindung mit den Fig. 7 bis 9 erläutert.

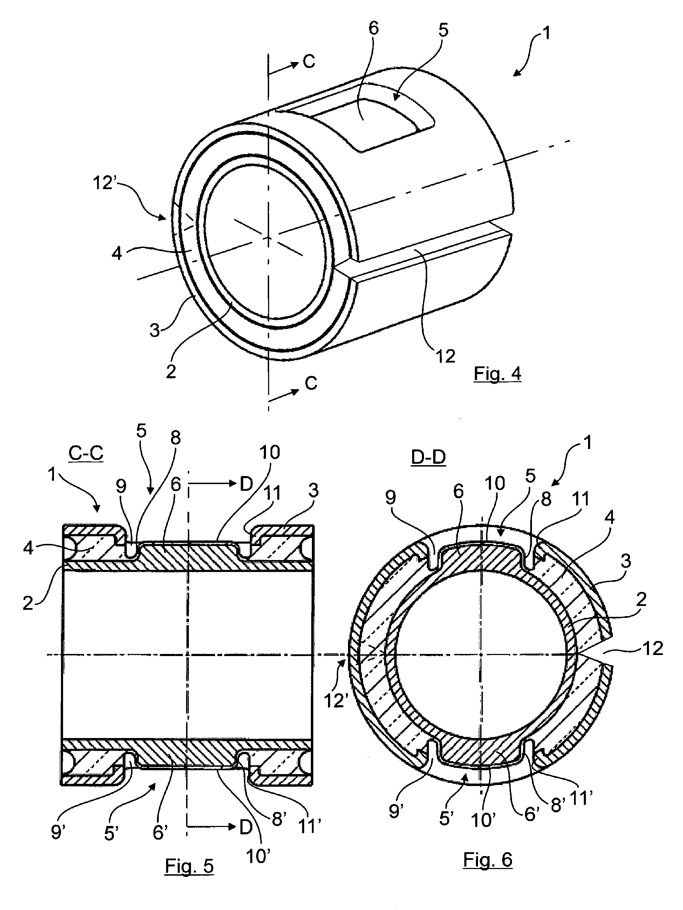

Fig. 4 zeigt in perspektivischer Ansicht eine Elastomer-Lagerbuchse 1, welche weitgehend ähnlich der ersten Ausführungsform der Elastomer-Lagerbuchse ist, so dass für gleiche Teile gleiche Bezugszeichen verwendet sind und im Weiteren nur die Unterschied herausgestellt werden: der grundsätzliche Aufbau ist gleich mit einem Innenrohr 2, einem Außenrohr 3 und einer dazwischen einvulkanisierten Gummischicht 4, sowie mit gegenüberliegenden Fensteröffnungen 5, 5' und dort hineinragenden Innenanteil-Anschlägen 6, 6'. Der Unterschied in den Fensterbereichen 5, 5' besteht darin, dass jeweils am Fensterrand 7, 7' das Außenrohr 3 mit einem Randsteg 11, 11' für eine stabile Anschlaggegenfläche nach radial innen im Bereich der Gummischicht 4 abgebogen ist. Zudem ist der Gummiüberzug 10, 10' auch über den umlaufenden Innenteilrand 8, 8' geführt.

Ein weiterer Unterschied zur ersten Ausführungsform besteht darin, dass das Außenrohr 3 einen Längsschlitz 12 aufweist, der sich V-förmig in der Gummischicht 4 bis zum Innenrohr 2 fortsetzt. Gegebenenfalls kann gegenüberliegend ein weiterer Längsschlitz 12' vorgesehen sein, strichliert angedeutet, so dass dann das Außenrohr 3 aus zwei Halbschalen besteht.

Im Einbauzustand sind jeweils beide Ausführungen der Elastomer-Lagerbuchsen 1 mit einer Durchmesserreduzierung des Außenrohrs 4 in einen im Durchmesser entsprechend kleineren Aufnahmeraum eingepresst, der hier strichliert als Aufnahmeauge 13 schematisch eingezeichnet ist. Beim Einpressvorgang wird durch die Durchmesserreduzierung die Gummischicht 4 zusammengepresst und eine Vorspannung darin aufgebaut. Bei der ersten Ausführungsform nach Fig. 1 wird beim Einpressvorgang das geschlossene Außenrohr 3 im Durchmesser verkleinert, während bei der zweiten Ausführungsform nach Fig. 7, wie in den Fig. 7 bis 9 dargestellt, der Längsschlitz 12 in Verbindung mit einer Durchmesserreduzierung des Außenrohrs 3 und einer Vorspannungsaufbringung in der Gummischicht 4 geschlossen wird.

Die Abmessungen der einzelnen Elemente sind dabei so dimensioniert, dass im dargestellten betriebsmäßig unbelasteten Einbauzustand jeweils ein Radial-Spalt 14, 14' zwischen dem Innenteil-Anschlag 6, 6' und dem Aufnahmeauge 13 zur Verfügung steht. Dieser Radial-Spalt 14, 14' stellt für eine Radialbelastung in dieser Richtung einen begrenzten freien Federweg für eine Radialauslenkung des Innenrohrs 2 bzw. des Innenteil-Anschlags 6, 6' dar, wobei der Gummiüberzug 10, 10' am Innenteil-Anschlag 6, 6' eine Anschlagfläche und die Innenfläche des Aufnahmeauges 13 die zugeordnete Gegenanschlagfläche bildet.

Zudem bildet der umlaufende Randspalt 9, 9' zwischen dem Innenteilanschlag 6, 6' und dem Fensterrand 7, 7' bzw. dem Randsteg 11, 11' einen anschlagbegrenzten freien Federweg für eine relative Axialauslenkung und/oder Verdrehauslenkung des Innenrohrs 2 bzw. des Innenteilanschlags 6, 6'. Bei der ersten Ausführungsform nach Fig. 1 (ohne abgebogene Randstege 11, 11') kann jeweils der Innenteilanschlag 6, 6' mit seinem Innenteilrand 8, 8' am Fensterrand der Gummischicht 4 unmittelbar anliegen. Bei der zweiten Ausführungsform nach Fig. 7 ist dagegen für den gummiüberzogenen Innenteilrand 8, 8' eine stabilere Abstützung am abgebogenen Randsteg 11, 11' möglich.

Die Elastomerschicht 4 ist in Verbindung mit den Abmessungen der übrigen Bauteile und der aufgebrachten Vorspannung so dimensioniert, dass im Bereich der freien Federwege vor der Anschlagfunktionen keine schädlichen Zugspannungen im Gummimaterial auftreten können, so dass dadurch ein sicherer Überlastungsschutz hergestellt ist.

Am Innenrohr 2 kann an der Durchgangsbohrung insbesondere mit einer Verschraubung ein erstes zu lagerndes Bauteil angeschlossen werden. Alternativ kann anstelle des Innenrohrs 2 ein Lagerbolzen mit entsprechender Außenfläche und abstehenden Lagerpratzen für den Anschluss des ersten zu lagernden Bauteils verwendet werden. Das zweite zu lagernde Bauteil wird am Aufnahmeauge 13 angeschlossen, wobei dieses auch integraler Bestandteil des zweites zu lagernden Bauteils sein kann.

### Bezugszeichenliste

- 1: Elastomer-Lagerbuchse
- 2: Innenrohr
- 3: Außenrohr
- 4: Gummischicht
- 5, 5': Fensteröffnung
- 6, 6': Innenteil-Anschlag
- 7,7': Fensterrand
- 8, 8': Innenteilrand
- 9, 9': Randspalt
- 10, 10': Gummiüberzug
- 11, 11': Randsteg
- 12, 12': Längsschlitz
- 13: Aufnahmeauge
- 14, 14': Radial-Spalt

## Patentansprüche

1. Elastomer-Lagerbuchse, insbesondere zur Lagerung eines Stoßdämpfers einer Fahrzeug-Achsanbindung,
mit einem Innenteil (2) zum Anschluss eines ersten zu lagernden Bauteils,
mit einem Außenrohr (3), welches das Innenteil (2) umgibt, und
mit einer Elastomerschicht (4) zwischen dem Außenrohr (3) und dem Innenteil (2), wobei im Einbauzustand das Außenrohr (3) mit einer Durchmesserreduzierung in einen im Durchmesser kleineren Aufnahmeraum (13) eines zweiten zu lagernden Bauteils unter Aufbringung einer Vorspannung in der Elastomerschicht einpressbar ist,
**dadurch gekennzeichnet,**
**dass** das Außenrohr (3) und die dortige Elastomerschicht (4) wenigstens eine Ausnehmung als Fensteröffnung (5, 5') aufweist, und
**dass** das Innenteil (2) einen radial als Erhöhung abstehenden, in die Fensteröffnung (5, 5') eingreifenden Innenteil-Anschlag (6, 6') aufweist, dergestalt dass im betriebsmäßig unbelasteten Einbauzustand bei vorgespannter Elastomerschicht (4) ein Radial-Spalt (14, 14') als anschlagbegrenzter, freier Federweg für eine Radialauslenkung des Innenteils (2) zwischen der radialen Außenfläche des Innenteil-Anschlags (6, 6') als Anschlagfläche (10, 10') und der Wandfläche eines umgebenden Aufnahmeraums (13) als Gegenanschlagfläche zur Verfügung steht.

2. Elastomer-Lagerbuchse nach Anspruch 1, **dadurch gekennzeichnet, dass** das Außenrohr (3) und die dortige Elastomerschicht (4) jeweils gegenüberliegende Fensteröffnungen, vorzugsweise zwei gleiche Fensteröffnungen (5, 5') mit zugeordneten Innenteilanschlägen (6, 6') aufweisen.

3. Elastomer-Lagerbuchse nach Anspruch 1 oder Anspruch 2, **dadurch gekennzeichnet,**
**dass** die Fensteröffnung (5, 5') und ein zugeordneter Innenteil-Anschlag (6, 6') jeweils so dimensioniert sind,
**dass** im Einbauzustand zwischen dem Rand der Fensteröffnung und dem Rand der entsprechenden Elastomerschicht-Ausnehmung sowie dem Rand (8, 8') des Innenteil-Anschlags (6, 6') zumindest in Teilbereichen, vorzugsweise umlaufend, ein Randspalt (9, 9') als freier Federweg für eine anschlagbegrenzte relative Axialauslenkung und/oder Verdrehauslenkung zur Verfügung steht.

4. Elastomer-Lagerbuchse nach Anspruch 3, **dadurch gekennzeichnet, dass** am Rand (7, 7') der Fensteröffnung (5, 5') das Außenrohr (3) mit einem Randsteg (11, 11') für eine stabile Anschlaggegenfläche nach radial innen in den Bereich der Elastomerschicht (4) abgebogen ist.

5. Elastomer-Lagerbuchse nach einem der Ansprüche 1 bis 4, **dadurch gekennzeichnet, dass** in einer radialen Draufsicht die Fensteröffnung (5, 5') und die radiale Außenfläche des zugeordneten Innenteil-Anschlags (6, 6') rechteckförmig ausgebildet sind.

6. Elastomer-Lagerbuchse nach einem der Ansprüche 1 bis 5, **dadurch gekennzeichnet, dass** die Elastomer-Lagerbuchse (1) kreiszylindrisch ausgebildet ist, mit einem kreiszylindrischen Außenrohr (3) mit einer kreiszylindrischen, zugeordneten Innenfläche des Aufnahmeraums (13) und mit einer kreiszylindrischen Außenfläche des Innenteils (2), wobei die radiale Anschlagfläche des Innenteil-Anschlags (6, 6') entsprechend der kreiszylindrischen Gegenanschlagfläche des Aufnahmeraums (13) für einen flächigen Anschlag als Kreiszylindersegment gebogen ausgeführt ist.

7. Elastomer-Lagerbuchse nach einem der Ansprüche 1 bis 6, **dadurch gekennzeichnet, dass** der Innenteil-Anschlag (6, 6') mit einem Elastomerüberzug (10, 10') überzogen ist.

8. Elastomer-Lagerbuchse nach einem der Ansprüche 1 bis 7, **dadurch gekennzeichnet,**
**dass** der Innenteil-Anschlag (6, 6') integral und materialeinheitlich am Innenteil (2) durch formende und/oder spanabhebende Verfahren ausgebildet ist, oder
**dass** der Innenteil-Anschlag (6, 6') als separates Bauteil mit dem Innenteil fest verbunden ist.

9. Elastomer-Lagerbuchse nach einem der Ansprüche 1 bis 8, **dadurch gekennzeichnet,**
**dass** das Innenteil als Innenrohr (2) mit einer axialen Anschlussbohrung für einen Schraubverbindung mit dem ersten zu lagernden Bauteile ausgebildet ist, oder
**dass** das Innenteil axial abstehende Anschlusspratzen für eine Verbindung zum ersten zu lagernden Bauteil aufweist.

10. Elastomer-Lagerbuchse nach einem der Ansprüche 1 bis 9, **dadurch gekennzeichnet, dass** die Elastomerschicht und/oder gegebenenfalls der Elastomerüberzug (10, 10') eine anvulkanisierte Gummischicht (4) ist, wobei die Dimensionierung dergestalt erfolgt dass bei einer anschlagbegrenzten Einfederung in der im Einbauzustand vorgespannten Gummischicht (4) keine Zugspannungen auftreten.

11. Elastomer-Lagerbuchse nach einem der Ansprüche 1 bis 10, **dadurch gekennzeichnet, dass** die Elastomer-Lagerbuchse (1) als kalibrierte Buchse mit geschlossenem Außenrohr oder als Schlitzbuchse mit längsgeschlitztem Außenrohr oder als Buchse mit zwei zusammenspannbaren Außenhalbschalen ausgeführt ist.

12. Elastomer-Lagerbuchse nach Anspruch 11, **dadurch gekennzeichnet, dass** die Elastomer-Lagerbuchse (1) mit ihrem Außenrohr (3) mittels einer sich insbesondere im Durchmesser verjüngenden Führungsbuchse in den Aufnahmeraum (13) einpressbar ist.
